Europäisches Patentamt

European Patent Office

Office européen des brevets

(11) Veröffentlichungsnummer: **0 451 652 A2**

## (12) EUROPÄISCHE PATENTANMELDUNG

(21) Anmeldenummer: 91105112.6

(22) Anmeldetag: 30.03.91

(51) Int. Cl.⁵: **C03B 37/06**

(30) Priorität: 12.04.90 DE 4011884

(43) Veröffentlichungstag der Anmeldung:
16.10.91 Patentblatt 91/42

(84) Benannte Vertragsstaaten:
**BE DE DK FR GB IT SE**

(71) Anmelder: **BAYER AG**

W-5090 Leverkusen 1 Bayerwerk(DE)

(72) Erfinder: **Nyssen, Peter Roger, Dipl.-Ing.**

Magnolienstrasse 6
W-4047 Dormagen 11(DE)
Erfinder: **Berkenhaus, Dirk, Dipl.-Ing.**
Urftstrasse 31
W-5000 Köln 50(DE)
Erfinder: **Strzelczyk, Ewald, Dipl.-Ing.**
Winand-Lukas-Strasse 10
W-4047 Dormagen 1(DE)
Erfinder: **Van Pey, Hans-Theo**
Am Pützbach 11
W-5152 Lipp(DE)

(54) Verfahren zur Herstellung von dickstellenarmen Mineralwollefasern.

㉗ Das Verfahren zur Herstellung von Mineralwollefasern beruht darauf, daß aus einem Schmelzeverteiler 3 austretende Schmelzeströme 1 in einer Ziehdüse 9 durch ein in axialer Richtung mit hoher Geschwindigkeit strömendes Blasmedium zerfasert
werden. Das mit Fasern beladene Blasmedium gelangt danach in einen Unterschalldiffusor 11, um die
Strömungsgeschwindigkeit zu reduzieren. Anschließend wird die faserbeladene Strömung 10 in einem
rechteckigen Schacht 13 weitergeführt. Zur Abtrennung von nichtfaserigen Bestandteilen (sog. Shots)
werden am Schachtende quer zur Hauptströmungsrichtung eine Vielzahl von Gasstrahlen 18, unter einem Winkel $\alpha$ von 30° bis 120° eingeblasen. Dadurch erfolgt eine Umlenkung der faserbeladenen
Strömung. Die in eine Richtung von $\beta = 60$° bis
140° umgelenkte Strömung 22 wird dann von einem
unter dem gleichen Winkel $\beta$ angebrachten Faserschacht 21 erfaßt und zu einem Ablageband 23
geführt. Dagegen fallen die nichtfaserigen Bestandteile (Shots) 19 aufgrund ihres geringeren Luftwiderstandes und ihrer höheren Massenträgkeit zwischen
den Gasstrahlen 18 hindurch und gelangen in den
unteren Austragschacht 20.

FIG.1

EP 0 451 652 A2

Die Erfindung betrifft ein Verfahren zur Herstellung von Mineralwollefasern, insbesondere Glasfasern und Diabasfasern mit einem Durchmesser von 0,1 µm bis 10 µm, vorzugsweise 0,1 bis 6 µm, nach dem Düsenblasverfahren, bei dem aus Schmelzeaustrittsöffnungen im Boden eines Schmelzeverteilers Schmelzeströme austreten, die in einer nachgeschalteten Ziehdüse durch ein im wesentlichen parallel zu den Schmelzeströmen strömendes Blasmedium zerfasert werden, wobei das Blasmedium durch ein Druckgefälle in die Ziehdüse eingesaugt und die Strömungsgeschwindigkeit in einem nachgeschalteten Diffusor reduziert wird. Ein derartiges Verfahren ist z.B. in EP-A 38 989 und in EP-A 200 071 beschrieben.

Bei der Herstellung von Mineralfasern nach dem Düsenblasverfahren entstehen nicht nur Fasern, sondern auch nichtfasrige Bestandteile, sogenannte Faserdickstellen, wie z.B. Perlen, Verdickungen, Knoten. Solche Dickstellen werden auch als "Shots" bezeichnet. Insbesondere bei der Verwendung von Schmelzen niedriger Viskosität, wie z.B. Diabas, können die nichtfasrigen Anteile einen hohen prozentualen Anteil im Produkt ausmachen und die Anwendungseigenschaften der Produkte verschlechtern.

So wird z.B. die Wärmeleitfähigkeit der aus den Mineralfasern hergestellten Matten oder Platten verschlechtert. Außerdem erhöhen die nichtfasrigen Bestandteile unnötigerweise das Raumgewicht der Produkte. Normalerweise nimmt man ein höheres Raumgewicht nur dann in Kauf, wenn dadurch die physikalischen Eigenschaften, wie Festigkeit und Wärmeleitfähigkeit, verbessert werden können. Teilweise werden durch den Einbau von Dickstellen bzw. Shots spezielle mechanische Eigenschaften wie das Rückholungsvermögen nach einer Komprimierung oder die Reißfestigkeit des Produktes deutlich verschlechtert.

Bei Anwendung der Fasern für Filtrationszwecke, z.B. in Form von Filterpapieren, verschlechtern die nichtfasrigen Bestandteile die Filtereigenschaften; d.h., das Abscheidevermögen wird schlechter. Die Reduzierung der nichtfasrigen Bestandteile ist daher von großem technischen und wirtschaftlichem Interesse.

Hier setzt die Erfindung an. Es liegt die Aufgabe zugrunde, bei einem Düsenblasverfahren eine Abscheidung der nichtfasrigen Bestandteile (Shots) im Anschluß an die gasdynamische Zerfaserung in der Blasdüse zu erreichen.

In der Technik der Abscheidung von Staubpartikeln aus Gasströmen sind die Methoden der Gegenstrom- und Querstromsichtung bekannt. In diesem Fall besteht die Aufgabe, den Feststoff nahezu vollständig aus dem Gasstrom abzuscheiden, wobei der Feststoff im allgemeinen in Form von Partikeln mit einer mehr oder minder breiten Korngrößenverteilung vorliegt.

Diese bekannten Techniken sind aus verschiedenen Gründen bei der Shotabscheidung in Verbindung mit dem Düsenblasverfahren nicht anwendbar:

1. Die Beladung des Gasstromes besteht im vorliegenden Fall aus Partikeln unterschiedlicher geometrischer Form, nämlich der Fraktion der Fasern und der Fraktion der Shots.

2. Eine Abscheidung der Fasern in einem Zwischenschritt zur Abscheidung der nichtfasrigen Bestandteile (Shots) kann nicht in Betracht gezogen werden, da die Fasern erst bei der Vliesbildung vom Gasstrom abgetrennt werden sollen.

3. Ferner ist die Shotabscheidung nur bei hohen Strömungsgeschwindigkeiten des Gasstroms möglich, um die Unterschiede in der Massenträgheit der Partikel für eine optimale Abscheidung zu nutzen.

Die erfindungsgemäße Problemlösung geht also von einem Düsenblasverfahren aus, bei dem die Beladung des für die Zerfaserung verwendeten Blasmediums aus den gewünschten Fasern und den unerwünschten Shots besteht. Die Höhe der Gesamtbeladung ist im wesentlichen abhängig von der gewünschten Produktqualität. Der prozentuale Anteil der Shots an der Beladung beträgt je nach Produktqualität zwischen 1 und 40 %, vorzugsweise 10 bis 25 %. Als Shots sind insbesondere Dickstellen >10 µm zu betrachten. Bei sehr feinen Fasern (d <5 µm) wirken sich jedoch auch Shots >5 µm störend aus. Mit der Erfindung sollen insbesondere Shots, die größer als 20 µm sind, abgeschieden werden. Es hat sich herausgestellt, daß dieser Shotanteil hinsichtlich der Masse mehr als 80 % aller Shots ausmacht.

Diese Aufgabe wird ausgehend von dem eingangs beschriebenen Verfahren erfindungsgemäß dadurch gelöst, daß die mit Fasern und Shots beladene Strömung nach der Abbremsung im Diffusor in einem Schacht mit rechteckigem Querschnitt weitergeführt wird, und daß an dessen Ende quer zur Hauptströmungsrichtung eine Vielzahl von Gasstrahlen unter einem Winkel $\alpha$ von 15° bis 110°, vorzugsweise 30° bis 90°, eingeblasen wird. Der Impuls dieser Gasstrahlen bewirkt eine vollständige Umlenkung der mit Fasern beladenen Strömung in eine Richtung $\beta$ von 60 bis 140°, vorzugsweise 90 bis 120°. Diese Strömung wird dann von einem unter dem gleichen Winkel $\beta$ seitlich angebrachten Faserschacht erfaßt und zu einem Faserablageband geführt.

Die Gasstrahlen werden zweckmäßig mittels einer Reihe von in einer Gasdruckkammer linear angeordneten Bohrungen erzeugt. Aus diesen Bohrungen treten die Gasstrahlen mit Schallgeschwindigkeit aus. Vorzugsweise beträgt der Abstand der Gasstrahlen an den Bohrungen mindestens 5 mm und besonders bevorzugt mehr als 10 mm. Sehr gut bewährt hat sich ferner eine Ausführungsform, bei der die Strömung durch eine Querschnittsverengung des Schachtes bis zum Eintritt der quergerichteten Gasstrahlen (Queranblasung) von 20 m/s bis 80 m/s am Eintritt in den Schacht auf 30 m/s bis 100 m/s beschleunigt wird. Besonders gute Abscheidungsergebnisse werden bei dieser Verfahrensvariante dann erzielt, wenn die Beschleunigung der Strömung durch eine Querschnittsverengung in Form einer zur Achse hin gekrümmten Schachtwand erfolgt, wobei das Verhältnis von Schachteintrittsquerschnitt zu Austrittsquerschnitt unmittelbar vor der Queranblasung 1:1 bis 2:1 beträgt. Aufgrund der Beschleunigung in der Querschnittsverengung entlang der gekrümmten Seitenwand findet infolge der auf die Partikel einwirkenden unterschiedlichen Trägheitskräfte in der Nähe der gekrümmten Seitenwand eine Anreicherung von Shots statt. Am Ende des Schachts an der Stelle des engsten Querschnitts treten gitterförmig die Gasstrahlen in den Hauptstrom ein. Aufgrund der Queranblasung mit Schallgeschwindigkeit wird die Strömung in den seitlichen Faserschacht umgelenkt. Die Abscheidung der unerwünschten Shots geschieht nun erfindungsgemäß in der Weise, daß sie aufgrund ihrer hohen Massenträgheit zwischen den aus den Bohrungen ausströmenden Gasstrahlen hindurchfallen, während die Fasern aufgrund ihrer Länge und ihres hohen Strömungswiderstandes im Gasstrom verbleiben und somit in den Faserschacht umgelenkt werden, Abhängig von der Größe des Impulses der Gasstrahlen können auch Shots, die unmittelbar im Bereich der Gasstrahlen herunterfallen, abgeschieden werden.

Das erfindungsgemäße Shotabscheidungsverfahren kann erfolgreich bei einer Gesamtbeladung der Blasluftströmung von $4 \times 10^{-3}$ bis $1 \times 10^{-1}$ kg/kg Gas, vorzugsweise $7 \times 10^{-3}$ bis $4 \times 10^{-2}$ kg/kg Gas, durchgeführt werden. In der Regel können bis zu 80 % der Shots >20 $\mu$m eliminiert werden. Der Wirkungsgrad der Abscheidung ist abhängig vom Impuls und der flächenmäßigen Abdeckung der Gasstrahlen, dem Anstellwinkel $\alpha$ und der Umlenkung der beladenen Strömung $\beta$ sowie dem Abstand der Gasstrahlen voneinander und kann abhängig vom Betriebszustand der Ziehdüse verhältnismäßig leicht optimiert werden.

Im folgenden wird ein Ausführungsbeispiel anhand von Zeichnungen näher erläutert, Es zeigen:

Fig. 1    Eine Ziehdüse mit einer nachgeschalteten Shotabscheidevorrichtung;

Fig. 2    die Shotabscheidevorrichtung in perspektivischer Darstellung und

Fig. 3    die Strömungsverhältnisse in der Shotabscheidevorrichtung.

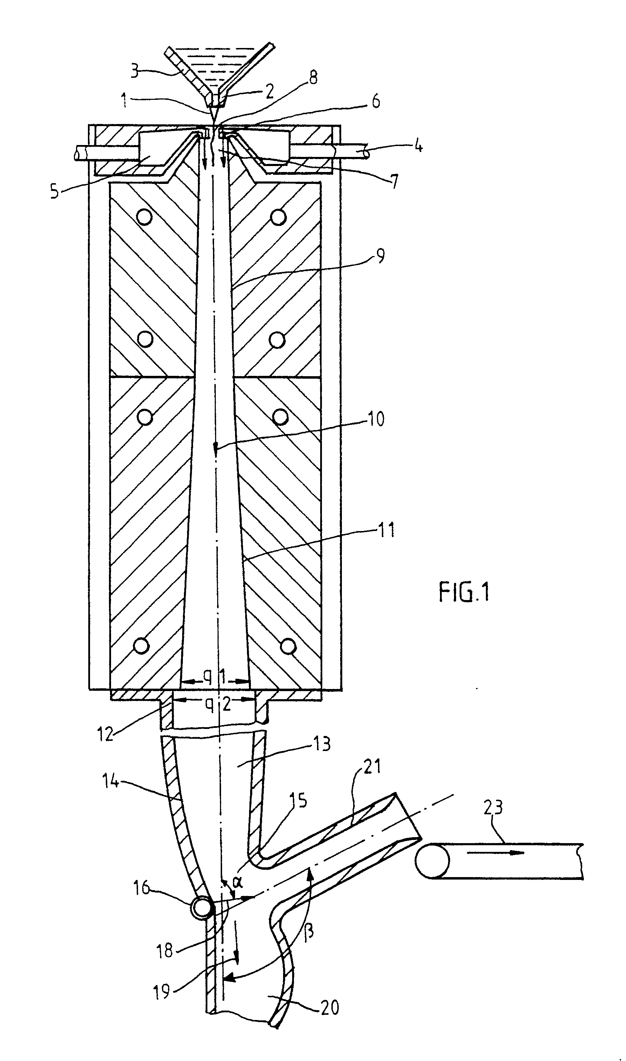

Gemäß Fig. 1 tritt der zur Zerfaserung gelangende Gasschmelzestrom 1 aus dem Nippel 2 des Schmelztiegels 3 aus. Die über Zuführungen 4, Druckkammern 5 und Bohrungen 6 erzeugten Treibgasstrahlen 7 bewirken einen starken Druckgradienten im Eintritt 8 der Ziehdüse 9, so daß Umgebungsluft am Ziehdüseneintritt 8 angesaugt wird, die zusammen mit den Treibstrahlen 7 als Blasmedium mit hoher Geschwindigkeit durch die Ziehdüse 9 strömt. Dabei wird durch das Druckgefälle im Ziehdüseneinlauf eine Zerteilung des Schmelzestroms in eine Vielzahl von Einzelfasern bewirkt. Wie schon eingangs beschrieben, läßt es sich nicht vermeiden, daß bei dem Faserbildungsprozeß auch ein bestimmter Anteil von Faserdickstellen (Shots), wie z.B. Perlen, Knoten, Klumpen oder lokale Faseranhäufungen, entstehen. Dieses Gemisch von Blasmedium, Fasern und Shots wird im folgenden als "feststoffbeladene Gasströmung" 10 bezeichnet. Die technischen Details einer Ziehdüse und die für den Faserbildungsprozeß verantwortlichen physikalischen Vorgänge werden in EP 0 200 071 ausführlich beschrieben.

Am Ende der Ziehdüse 9 erfolgt eine Geschwindigkeitsreduzierung von Überschall auf Unterschall mittels Verdichtungsstössen. In dem darauffolgenden konisch divergierenden Unterschalldiffusor 11 wird die Gasströmung auf eine Geschwindigkeit von 20 bis 100 m/s, vorzugsweise 30 bis 80 m/s, abgebremst.

An den Unterschalldiffusor 11 schließt sich über einen dazwischen geschalteten Stoßdiffusor 12 ein weiterer Schacht 13 an. Im Stoßdiffusor 12 erfolgt in Strömungsrichtung eine abrupte Querschnittserweiterung, wobei das Querschnittsverhältsnis

$$\frac{q_1}{q_2}$$

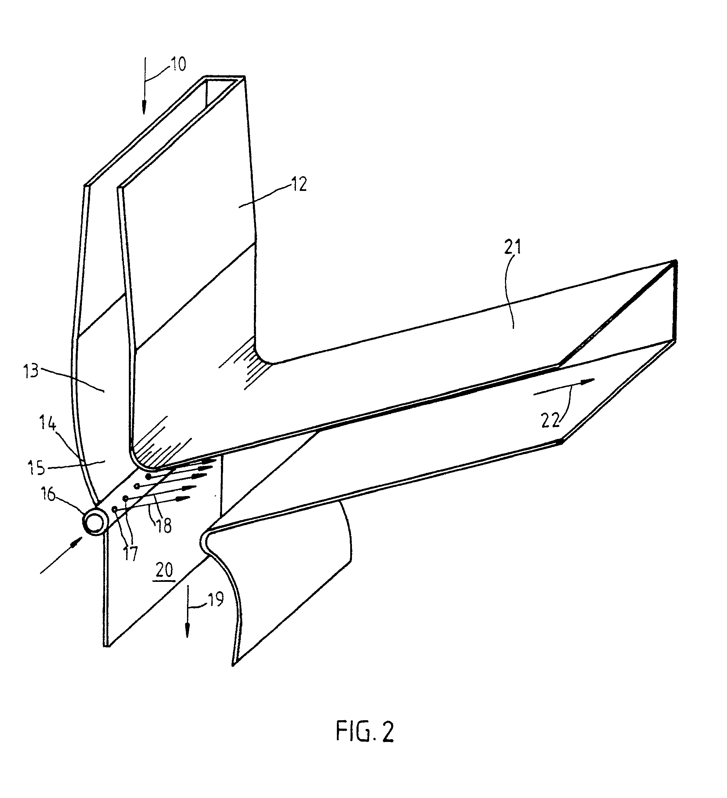

zwischen 0,6 und 0,95 liegt. Zumindest die Rückwand 14 des Schachtes 13 ist leicht nach innen gekrümmt, so daß sich der Schachtquerschnitt in Strömungsrichtung verringert (Querschnittsverringerung 15). Dies hat eine Erhöhung der Strömungsgeschwindigkeit auf 50 bis 100 m/s zur Folge. Am unteren Ende der gekrümmten Schachtrückwand 14 ist senkrecht zur Ziehdüsenachse ein Verteilerrohr 16 angeordnet. Wie aus Fig. 2 ersichtlich, ist das Verteilerrohr 16 mit seiner Mantelfläche teilweise in die Rückwand 14 integriert. Das Verteilerrohr 16 weist in seiner Längsrichtung eine Vielzahl von Bohrungen 17 auf, aus denen Gas mit Schallgeschwindigkeit in Richtung auf die feststoffbeladene Gasströmung 10 austritt. Die in gleichmäßigen Abständen über die gesamte Schachtbreite hinweg austretenden Gasstrahlen 18 bilden ein gasdynamisches Gitter, durch dessen Zwischenräume Shots 19 durch einen Austragsschacht 20 herunterfallen, während die leichteren Fasern von den Gasstrahlen 18 mitgerissen werden und durch einen seitlich angebrachten Faserschacht 21 abgezogen werden. Die Gasstrahlen 18 werden unter einem Winkel $\alpha$ von 15 bis 110°, vorzugsweise 30 bis 90°, gegen die Ziehdüsenachse eingeblasen. Die Umlenkung der faserbeladenen Strömung (Winkel $\beta$) beträgt 60 bis 140°, vorzugsweise 90 bis 120°. Den gleichen Anstellwinkel $\beta$ hat auch der seitlich angebrachte Faserschacht 21, der die faserbeladene, aber Shot-freie Strömung 22 zu einem Ablageband 23 weitertransportiert, auf dem die Fasern abgeschieden werden (siehe Fig. 1). Der Abstand A der Bohrungen 17 im Verteilerrohr bzw. der Gasdruckkammer 16 soll mindestens 5 mm und vorzugsweise mehr als 10 mm betragen. Die Querschnittsverengung am Schachtaustritt ist so bemessen, daß das Verhältnis von Schachteintrittsquerschnitt zu Austrittsquerschnitt maximal 2:1 beträgt.

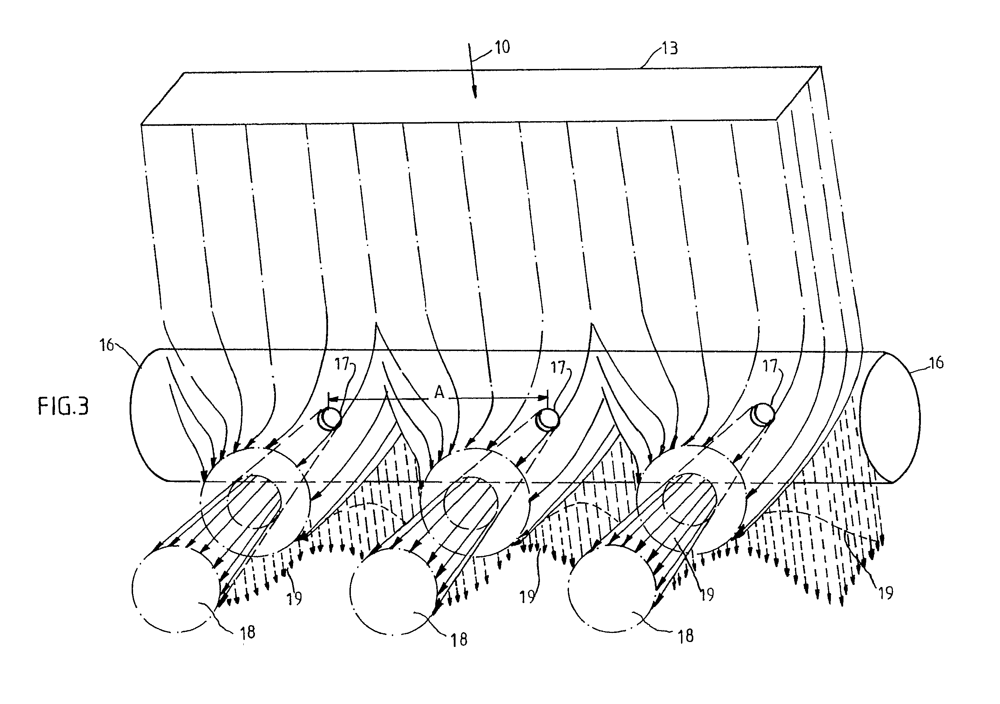

Die für die Shotabscheidung maßgeblichen strömungsphysikalischen Bedingungen werden im folgenden anhand von Fig. 3 erläutert. Gezeigt ist wiederum der rechteckige Schachtquerschnitt, in welchem die mit den Feststoffen beladene Gasströmung 10 nach unten strömt. Quer dazu ist das Verteilerrohr bzw. die Druckkammer 16 mit den Bohrungen 17 angeordnet. Mit Hilfe der Strömungspfeile ist angedeutet, wie die aus den Bohrungen 17 austretenden Gasstrahlen 18 durch ihren Impuls die von oben anströmende feststoffbeladene Gasströmung 10 umlenkt. Die Shots 19, die aufgrund ihrer Größe, Masse und ihres Luftwiderstandes nicht abgelenkt werden können, setzen ihren Weg in erster Näherung geradlinig fort. Hierbei liegt das Abscheidemaximum genau in der Mitte des Bohrungsabstandes A. Der Abstand A wird zweckmäßig so gewählt, daß die Gasstrahlen erst dann zusammentreffen, wenn eine vollständige Umlenkung des gasförmigen Anteils der Strömung 10 erfolgt ist.

Ausführungsbeispiel

Die nachfolgend beschriebene Shotabscheidung wurde mit einer in EP-A 0 200 071 beschriebenen Ziehdüse in Verbindung mit einem Shotabscheider gemäß Fig. 1 bis Fig. 3 durchgeführt. Der mit Fasern und Shots beladene Luftstrom 10 mit einem Feststoffanteil von 0,01 kg/kg Luft erfährt am Ende der Ziehdüse 9 eine Verdichtung von Überschall auf schallnahe Geschwindigkeit und wird anschließend in dem Unterschalldiffusor 11 mit einer Länge von 120 mm auf eine Geschwindigkeit von 80 m/s am Ende des Diffusors 11 verzögert. Mit dieser Geschwindigkeit gelangt der feststoffbeladene Luftstrom 10 in den rechteckigen Querschnitt des Schachtes 13. Der Diffusoraustrittsquerschnitt betrug 25 x 140 mm, der Eintrittsquerschnitt des Schachts 13 40 x 150 mm. Der Schacht 13 verläuft über eine Länge von 100 mm mit einem konstanten Querschnitt. Daran anschließend wird der Strömungsquerschnitt durch die mit einem Radius von 200 mm gekrümmte Rückwand 14 auf 30 x 150 mm verengt (Querschnittsverengung 15). Dabei beträgt die Strömungsgeschwindigkeit aufgrund der Stoßdiffusorwirkung am Eintritt in den Schachtbereich mit der gekrümmten Rückwand 14 ca. 40 bis 70 m/s und in der Querschnittsverengung 15 60 bis 100 m/s, vorzugsweise 80 bis 100 m/s. Am unteren Ende der gekrümmten Rückwand 14 ist quer zur Strömungsrichtung ein Verteilerrohr 16 angeordnet, das neun Bohrungen 17 mit einem Durchmesser von 2 mm aufweist. Durch diese Bohrungen 17 treten Gasstrahlen 18 unter einem Druck von 2 bis 6 bar, vorzugsweise 5 bar, (im Verteilerrohr 16) mit Schallgeschwindigkeit aus. Die austretenden Luftstrahlen 18 bilden wie beschrieben ein aerodynamisches rechenförmiges Gitter. Dies hat zur Folge, daß die faserbeladene Luft, wie anhand von Fig. 3 beschrieben, in den seitlich angebrachten Faserschacht 21 umgelenkt wird. Der Faserschacht 21 ist unter einem Winkel $\beta$ = 110° angebracht. Die Gasstrahlen 18 werden unter einem Winkel $\alpha$ = 70° gegen die Ziehdüsenachse eingeblasen. Der Querschnitt des Faserschachtes 21 ist so bemessen, daß die Geschwindigkeit des ihn durchströmenden Faserluftstromes 22 50 bis 100 m/s beträgt. Der Faserschacht 21 führt zu einem Ablageband 23, auf dem die Fasern in Vliesform abgelegt werden. Die nichtfaserigen Bestandteile (Shots) 19 können aufgrund ihrer höheren Massenträgheit zwischen den Gasstrahlen 18 hindurchschießen und gelangen in den unteren Austragsschacht 20. Mit dem hier beschriebenen Verfahren konnten ca. 70 % bis 80 % aller nichtfaserigen Bestandteile (Shots) mit einem mittleren Durchmesser von 20 $\mu$m bis 40 $\mu$m und gröbere Shots zu 80 % bis 100 % abgeschieden werden.

**Patentansprüche**

1. Verfahren zur Herstellung von Mineralwollefasern, insbesondere Glasfasern und Diabasfasern, mit einem Durchmesser von 0,1 $\mu$m bis 10 $\mu$m, vorzugsweise 0,1 $\mu$m bis 6 $\mu$m, nach dem Düsenblasverfahren, bei dem aus Schmelzeaustrittsöffnungen (2) im Boden eines Schmelzeverteilers (3) Schmelzeströme (1) austreten, die in einer nachgeschalteten Ziehdüse (9) durch ein im wesentlichen parallel zu den Schmelzeströmen strömendes Blasmedium zerfasert werden und die Strömungsgeschwindigkeit in einem nachgeschalteten Diffusor (11) reduziert wird, dadurch gekennzeichnet, daß im Anschluß an den Diffusor (11) die mit Fasern und Shots beladene Strömung (10) in einem rechteckigen Schacht (13) weitergeführt wird, daß am Schachtende quer zur Hauptströmungsrichtung eine Vielzahl von Gasstrahlen (18) unter einem Winkel $\alpha$ von 30° bis 120°, vorzugsweise 60° bis 90°, eingeblasen wird, wodurch eine Umlenkung der faserbeladenen Strömung erfolgt und daß die umgelenkte Strömung (22) durch einen unter einem Winkel $\beta$ = 60° bis 140°, vorzugsweise 90° bis 120°, angebrachten Faserschacht (21) erfaßt und zu einem Ablageband (23) geführt wird.

2. Verfahren nach Anspruch 1, dadurch gekennzeichnet, daß die Gasstrahlen (18) aus einer Reihe von in einer Gasdruckkammer (16) linear angeordneten Bohrungen (17) mit Schallgeschwindigkeit austreten.

3. Verfahren nach Anspruch 1 bis 2, dadurch gekennzeichnet, daß der Abstand A der Gasstrahlen (18) an den Bohrungen (17) mindestens 5 mm und vorzugsweise mehr als 10 mm beträgt.

4. Verfahren nach Anspruch 1 bis 3, dadurch gekennzeichnet, daß die Strömungsgeschwindigkeit am Eintritt in den rechteckigen Schacht (13) 20 m/s bis 100 m/s beträgt und daß die Strömung (10) durch eine Querschnittsverengung (15) bis zum Eintritt der quer gerichteten Gasstrahlen (18) (Queranblasung) auf 50 m/s bis 100 m/s beschleunigt wird.

5. Verfahren nach Anspruch 4, dadurch gekennzeichnet, daß die Strömung (10) durch eine Querschnittsverengung (15) in Form einer zur Achse hin gekrümmten Schachtwand (14) beschleunigt wird, wobei das Verhältnis von Schachteintrittsquerschnitt zu Austrittsquerschnitt unmittelbar vor der Queranblasung 1,2:1 bis 2:1 beträgt.

6. Verfahren nach Anspruch 1 bis 5, dadurch gekennzeichnet, daß die Ziehdüse (9) mit einer Gesamtbeladung des Blasmediums von $4 \times 10^{-3}$ bis $1 \times 10^{-1}$ kg/kg Gas, vorzugsweise $7 \times 10^{-3}$ bis $4 \times 10^{-2}$ kg/kg Gas, betrieben wird.

7. Verfahren nach Anspruch 1 bis 6, dadurch gekennzeichnet, daß die Strömung am Eintritt in den Schacht (13) durch einen Stoßdiffusor (12) geführt wird.

FIG.1

FIG. 2

FIG.3

EP 0 451 652 A2